# EUROPEAN PATENT SPECIFICATION

(11) **EP 3 751 994 B1**
(45) Date of publication and mention of the grant of the patent: **10.08.2022**
(21) Application number: 19710174.4
(22) Date of filing: 11.02.2019
(51) Int. Cl.: A01K 1/01, G05D 1/02

(54) **METHOD AND ARRANGEMENT FOR MANURE HANDLING**
VERFAHREN UND ANORDNUNG ZUR GÜLLEBEHANDLUNG
PROCÉDÉ ET SYSTÈME DE MANIPULATION DE FUMIER

(30) Priority: 13.02.2018 SE 1850152
(43) Date of publication of application: 23.12.2020
(60) Divisional application: 22182348.7
(73) Proprietor: DeLaval Holding AB, 147 21 Tumba (SE)
(72) Inventor: FURDAK, Józef, 147 21 Tumba (SE); HOFMAN, Piotr, 147 21 Tumba (SE); JAKLIK, Bartlomiej, 147 21 Tumba (SE); MALECKI, Marcin, 147 21 Tumba (SE); PROKOWSKI, Mateusz, 147 21 Tumba (SE)
(74) Representative: DeLaval International AB
(86) International application number: PCT/SE2019/050115
(87) International publication number: WO 2019/160480

(56) References cited:
- EP-A1- 1 557 082
- WO-A1-2017/133708
- CN-B- 103 983 216
- US-A1- 2010 006 127
- US-A1- 2012 291 714
- US-A1- 2015 223 427
- Anonymous: "Manure Scraper Robot SRone and SRone+", , 14 November 2017 (2017-11-14), XP055593182, Retrieved from the Internet: URL:https://web.archive.org/web/2017111410 5947/https://www.gea.com/en/products/manur e-scraper-robot-srone.jsp [retrieved on 2019-05-31]

## Description

Today, autonomous vehicles are developed, which are capable of e.g. collecting horse manure or cow manure (WO2016/023716 A1; EP2731420 B1). There are also autonomous vehicles which are used for moving/displacing animal feed, sometimes called "feed pushers". Some of these autonomous vehicles are equipped with a camera, which is used for navigating the environment, while others have preprogrammed routes and/or navigates by use of radio beacons.

One example of an autonomous vehicle is the so-called "Zauberzeug", developed by Perpetual Mobile GmbH (http://www.zauberzeug.de/). This vehicle is guided by a camera, which is mounted on a wall, overlooking an area where the autonomous vehicle is to operate. By use of image processing technique, the camera can also detect piles of e.g. horse manure or rocks, which are clearly visible against a light background. Information regarding the location of the horse manure can then be transferred to the autonomous vehicle, which may pick it up or sweep it away.

It is generally thought that autonomous vehicles are the future. Although autonomous vehicles are appealing, they are associated with problems of their own

The inventors have realized a number of problems associated with more traditional equipment for manure handling, and have come up with inventive solutions to these problems. Some of the solutions described herein may be applicable also to autonomous vehicles. However, this will not be discussed herein.

In a barn or other building where animals, such as dairy or meat animals are kept, there will be manure. Some animals produce more manure than others, but as an example, one cow can produce about 50 kg of manure per day, which makes the requirements on manure handling equipment very high. The consistency and/or other properties of some types of manure or effluents also makes the environment and working conditions for manure handling equipment extremely hostile and difficult.

One type of manure handling devices is so-called scrapers. Scrapers may have different sizes and shapes, and are typically pulled along an alley by a chain, rope or wire. The scrapers displace the manure along the alleys, e.g. such that it either is drained through a slated/slit/vented floor, or is displaced to a special drain where it may propagate to a sewer, or similar, leading e.g. to a manure tank or a manure lagoon. When using the term "scraper" herein, this term is not intended to include autonomous vehicles. The solution described herein enables a more efficient use of a widely spread technology for manure handling.

In US2012291714 A1 a safety device for a manure scraper is described where a detecting means, such as a light beam sensor or a 3D camera, is arranged to detect the presence of a foreign object of a certain height, such as a calf, pushed by the scraper at the end of an alley in a barn.

The invention relates to a method for controlling the operation of a manure scraper, and scraper arrangement, according to the independent claims.

### Self-learning the alley

Scrapers typically run along an alley. Their route has a start position and an end (or stop) position, and may pass a number of locations where the effluent can be drained to a sewer. The alley need not be straight, but can have bends or curves. A wide or long alley could be provided with two or more scrapers, each cleaning a part of the alley, either consecutively along the alley or in parallel for the same segment of the alley.

One or more cameras are mounted along an alley where a scraper is to run. The number of cameras used can depend on the length, width and/or other properties of the area to be cleared from manure, and/or on properties of the cameras (such as covered area/capacity). The number and/or capacity of the cameras should be enough for covering the area(s) in which it is desired to control the activity of a scraper. For example, a first camera can be mounted such that its field of view comprises an intended starting point/position of the scraper(s), and a second camera may be mounted such that its field of view comprises an intended end point/position of the scraper(s). Preferably, the cameras are mounted e.g. in the ceiling or on walls, or similar, at some distance from the floor, and thus also from the manure and animals. Preferably, enough cameras are used, such as for the majority, or even all of the scraper's route to be covered by the cameras in cooperation. The combined fields of view of the cameras may cover the length of the scraper route.

The cameras obtain/capture images, which may be provided to a processing unit provided/configured with/ adapted for image processing, e.g. provided with appropriate software and hardware capacity. The processing unit/ image processing software may be configured for/capable of image recognition and object recognition.

During a configuration phase, a scraper may be put in a starting position (e.g. intended or suitable starting position), which position is then triggered to be registered by the camera(s)/processing unit as a starting position. The scraper may then be moved to an end position (e.g. intended or suitable end position), which position is then triggered to be registered by the camera(s)/processing unit as an end position. Such triggering of positions may be managed via a relatively simple configuration interface run e.g. on a mobile device.

A user control interface could be created, which is to be run on a user device (such as a computer, a Smartphone or a tablet), in which a virtual map is created of the area in which the scraper is to be operated, based on information derived from images captured by the one or more cameras. The virtual map could be presented as an image of the whole area or one or more parts of an area in which the scraper is to be operated. The virtual map need not correspond to what is captured within the field of view of one camera, but could be composed from information from a plurality of cameras, or only from parts of what is obtained from the one or more cameras. For example, by use of such a user control interface, a certain image area may be defined as a scraper body (e.g. a part of the image which comprises the scraper body), and certain position in the virtual map/image may be defined as end and start positions of the scraper. The input from the user control interface, e.g. the selected/identified location of start and end positions for the scraper could then be provided to a processing unit, which could use this information as reference when to detect whether the scraper has reached a start or end position. The use of such an interface may or may not remove the need of physically placing the scraper in those positions. Other positions and areas may be programmed in the same manner, creating a virtual route of the scraper.

Such an interface could be used for different initialization and/or configuration tasks. For example, it could be used for defining intervals or areas of the working area which are not covered by any camera. The length of the alley/working area could be inserted into the interface, and possibly also a length of a non-camera covered area. An alternative method for defining/determining a non-camera covered distance is to run the scraper at constant speed along the whole length of operation (from start to end position), and then based on camera information captured during this run, estimate any distance of the route that is not covered by a camera (captured in the field of view of any camera). This would be possible to determine automatically when the length of the route is known. (Depending on what type of area that is not covered by cameras, it may be suitable to run the scraper at slow speed in such areas and/or apply other types of safety mechanisms if there is a risk of running into obstacles (e.g. animals) there.

The images from the one or more cameras, and/or information derived based on the images, may be provided to the same (one) processing unit, where the information may be processed separately or in combination such that e.g. information on the position of the scraper may be derived.

Thus, given that a start position and an end position is derived/obtained/registered, a route of the scraper may be derived by the processing unit. The information on the route derived by the processing unit may be used to control the operation/running of the scraper, either directly by the processing unit, which may control e.g. a motor driving the scraper, or via some other control equipment.

The processing unit could e.g. trigger a motor to stop and reverse, when the scraper is determined (e.g. by means of image processing) to have reached its end position, and then trigger the motor to stop reversing and start forward operation, i.e. scraping, when the scraper is determined (e.g. by means of image processing) to have reached its end position.

Similarly, the scraper (the motor driving the scraper) may be controlled to e.g. adjust the speed at some intermediate position, which may be registered in a similar manner as the start and end position. Such an intermediate position may be associated with a stationary obstacle, which e.g. requires a reaction of the scraper operation, such as folding of the scraper to avoid the obstacle. The intermediate position may otherwise be associated with e.g. a feeding station or crossing animal pathway, where a different, e.g. lower speed may be desired in order to avoid scaring or hitting any animals.

### Replacing used "end of the alley" detection methods

One aspect of this is that other methods for detecting when a scraper has reached an end position may be replaced by the herein suggested technology. In some embodiments, a single camera may be used, e.g. only at the end of an alley, for enabling detection of when the scraper has reached and end position and control a scraper driving motor based on this information. Previously, different solutions have been used, such as switches, which are pushed by the scraper when reaching a position (e.g. passing over the switch), or observation of the motor activity, e.g. in form of observing/deriving how long/far a wire/chain or other type of the pulling means to which the scraper is connected has been pulled by the motor.

### Calibration of scraper position

A problem with scrapers which are operated by means of a wire or other similar mechanism is elongation of said wire due to the strain and/or wear during the operation. Thus, using the motor activity or wire length to determine the position of the scraper might be unreliable. By use of image processing based on images captured by a camera having a scraper end point in a scraper alley in its field of view, the scraper driving mechanism could be calibrated and/or adjusted based on a determined elongation of the wire and/or slippage of the wire in the driving mechanism. For example, an estimated position of the scraper in the alley, which is determined based on information associated with the motor's driving force and/or a run length of the wire may be compared with an observed position of the scraper determined based on image processing by a processing unit connected to a camera capturing an image of the scraper. Based on the difference between the two positions, the estimated and the observed one, the estimated position could be corrected or calibrated. For example, a value for the estimated position could be set to the observed position in a processing unit; the estimation calculation could be adjusted to compensate for the difference between the estimated and the observed scraper position; the wire could be automatically shortened or stretched, by means of a shortening/stretching mechanism. Alternatively, an alert signal could be provided, e.g. to a user interface, indicating how much the wire should be shortened, in case the wire must be attended to manually. Further, the elongation of the wire overtime could be estimated based on the elongation between calibrations, given that the time between calibrations is registered or otherwise obtained. Thereby an automatic compensation for the elongation overtime could be performed, by a reoccurring automatic adjustment of the wire length; the estimation calculation and/or reoccurring alert signals to a user, when a wire or other driving mechanism is estimated to have become e.g. X % longer than at the last calibration. The elongation could be verified by observing the actual scraper position e.g. when being operated in a forward direction and/or when being operated in a reverse direction.

### Self-adjusting a cleaning schedule

Embodiments of the subject matter described herein could also be used for adjusting a cleaning schedule of a scraper solution. A cleaning schedule is normally preprogrammed based on time, such that the scraper is started and run at certain periods during the day and/or night. Such embodiments could involve one or more cameras placed at at least a certain height over the floor having at least part of the alley in its/their field of view. Thereby, images obtained by the camera(s) may be analyzed by means of image processing, and the actual need and/or amount of manure to be cleared by a scraper may be estimated in real-time, or close to real-time. Information derived based on the images may then be used for controlling the activation, operation and deactivation of the scraper.

For example, during summer in the Nordic countries, animals are let out for pasture, while they still have access to the barn in order to be able to visit an automatic milking station and/or to eat additional feed (i.e. in addition to the grazing). During such times, the amount of manure present on the barn floor at different times of day may vary substantially from day to day, depending on things like weather or temperature (how much time the animals spend in the barn). By estimating the amount of manure that needs to be cleared by a scraper, the scraper could be activated according to a set of rules in dependence of this amount. For example, by testing the capacity of a scraper, it could be derived a maximum amount of manure which can be handled by the scraper in one sweep. The scraper may then be activated e.g. when this derived maximum amount of manure is observed (by means of image processing) in the alley. The consistency of the manure may also be important for a decision to activate the scraper. For example, dried cow manure may be very difficult to remove. Thus, the consistency of the manure may be estimated based on camera images, e.g. by determining light reflections in the manure (dry manure reflects less light). Based on the derived information, the scraper can be activated and run e.g. just before the manure becomes too dry to displace. This can be done irrespective of whether the amount of manure to be cleared has reached a certain level or not. Decisions based on automatically observed manure conditions may be used in addition to a timer based scraper schedule, or, the scraper could be run entirely based on automatically observed real-time conditions.

Moreover a watering system may or may not be connected with the image recognition system adding water to the manure if needed.

Thereby, energy can be saved e.g. by not running the scraper too often, and/or by not having to/trying to clear dried manure.

### Dynamic control of scraper speed

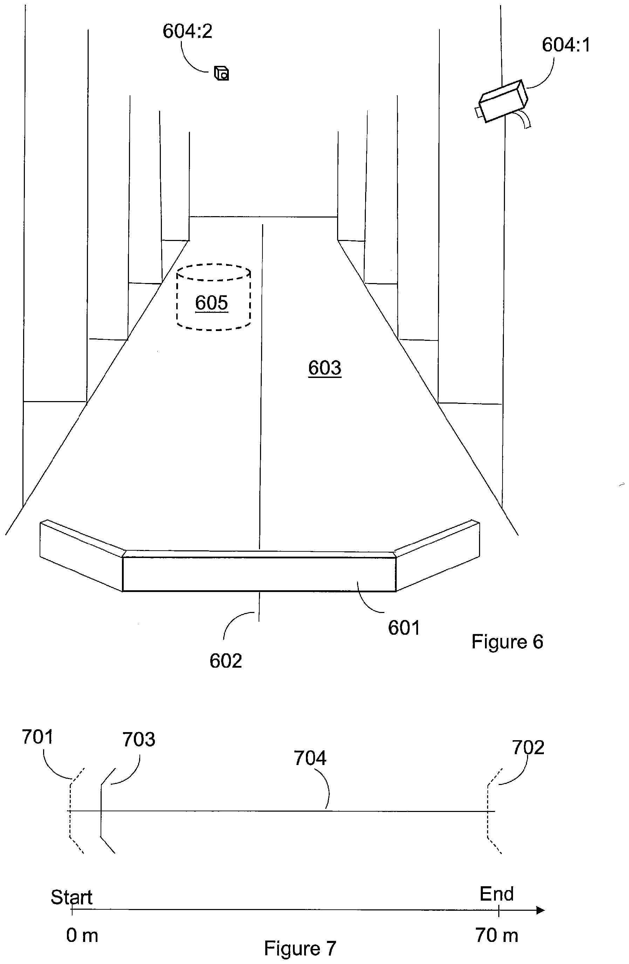

By observing the amount of manure present at different parts of an area which is to be cleared by a scraper, e.g. an alley, the speed of the scraper could be dynamically adapted to the observed presence of manure. For example: in an alley which is 70 meters long, and the scraper start position is at 0 meters and end position is at 70 meters (cf. figure 7), it has been determined that there is manure to be cleared in the interval 40-60 meters, but not so much in the rest of the alley. Based on this information, the scraper could be run at relatively high speed from 0-40 meters, and then when reaching 40 meters (where manure has been observed) be controlled to adopt a slower speed, more appropriate for displacing manure. This lower speed could be maintained e.g. until the manure is cleared to a drain. In case a scraper has cleared observed manure in the 20-30 meter interval in a 100 meter alley, and there is a drain at 50 meters and there is no observed manure to clear in the 50-100 meter interval, the scraper could be reversed to a start position. In this 100 m example, the scraper could be run at relatively high speed in the interval from 0-20 meters of the alley, then at an appropriate work speed between 20-50 meters, when displacing manure to a drain. The occurrence of drains could be made known to the processing unit deriving information from images captured by cameras, e.g. during a configuration phase, where it has been indicated to the processing unit that a current position of the scraper should be associated with a drain/sewer. Alternatively, this information could be derived, e.g. by the processing unit, by providing information about the load on the motor driving the scraper to the processing unit. Based on the load on the motor, it could be derived that the load on the motor/scraper is reduced/decreased at a certain observed scraper position. This information may be used by the processing unit to conclude that the position is associated with a drain, and this conclusion may be used in future calculations and e.g. control of scraper speed. Such determining of drain positions may be performed e.g. during an initialization period.

The scraper speed could alternatively or in addition be controlled in dependence of observed presence of obstacles, such as animals, in the alley in which the scraper is to run. This will be described in more detail below.

### Obstacle detection

When running automatic devices amongst living creatures, safety is an important issue. A scraper needs to be powerful enough to be able to push a heavy manure, and thus it may also harm animals getting in its way, especially small animals, such as calves. This is often solved by running the scraper manually with a human observer and/or at a very slow speed, such that the animals have time to observe it and to move away. There may also be a safety stop in the scraper control system, such that when the scraper is determined, based e.g. on increased required driving force/power consumption, to have hit an obstacle, the scraper stops for a period of time, and then starts moving again.

According to embodiments of the invention, cameras mounted e.g. on a wall or in the ceiling, capture images of the area of operation of a scraper, and these images may then be processed by image processing software run on a processing unit, which may perform object recognition, not only in regard of the scraper, but also for animals or machines present in the area. For example, the relation between observed positions and/or movement directions and velocity of the scraper and an animal or machine could be analyzed in real-time, or close to real-time and an action could be triggered based on the analysis, such as controlling the scraper to stop in order to avoid colliding with/hitting the animal, or to slow down or speed up in order to avoid a collision with the animal. Thereby, safety may be maintained, while still running the scraper efficiently, e.g. by avoiding long safety stops. The scraper can be stopped before colliding with an animal, also when an animal walks in the same direction as the scraper with a slightly higher speed than the scraper. Eventually, the animal would pass the scraper and place a hoof in front of the scraper. By means of embodiments of the invention, the scraper can be stopped just before the animal reaches the scraper or places its hoof in the route of the scraper i.e. before the animal risks being injured/hit by the scraper. The software and/or processing device could be configured to have special rules for different obstacles/animals. For example, more cautious safety rules in terms of stopping and slowing down the scraper could be applied for animals below a certain size and/or having a certain movement pattern, such as calves and other young stock, such as lambs or kids (goat or human). This may be done with the insight that young animals may not have enough experience of how to assess the risk of a moving scraper, and may also have a less developed sense of balance. Young and/or small animals may also be quite light-weight as compared to adult animals, and thus e.g. not be sensed by a scraper safety mechanism being based on power consumption/applied force of the motor running the scraper. The power sensing control system connected with the image recognition may be supplied with the information of the source of the increased load and take action accordingly to programmed and/or gathered information e.g. continue the movement or to trigger a stop of the scraper.

Further, a safety system based on image processing as suggested herein, would also prevent overload on the scraper driving mechanism, which may otherwise occur when e.g. heavy animals or machines block the way for the scraper and a safety mechanism based on power consumption/applied force, or similar, is non-existent or not working.

If someone has placed a static heavy object in the alley, which block the scraper, e.g. for a certain amount of time, an alert signal could be sent to a user interface or similar, indicating e.g. that the situation needs human interference. This could also be relevant if/when animals have blocked the path of the scraper for a certain amount of time, entailing e.g. that the amount of manure increases over a certain level due to the interrupted scraper function.

By having control of the position, movement direction and/or speed of the scraper and any animal, machine and/or other object in its way, the speed of the scraper could be controlled in an efficient way. For example, when it is determined that the alley is clear of animals and objects, the scraper could be controlled to run at a higher speed than if there is an observed risk of an animal stepping in the way of the scraper. This knowledge could be combined with the detection of manure presence described above, and the speed of the scraper could be controlled based both on location of obstacles to be avoided and on amount and position of manure to clear. The speed of the scraper could be automatically selected e.g. from a set of different speeds in dependence of occurrence of obstacles and manure. In other embodiments, the speed could be varied dynamically, e.g. between 0 m/s and a predetermined maximum speed. For example: No observed obstacles in an alley segment with no manure could entail selection of the highest speed. In this case, the highest speed could be selected irrespective of whether the scraper moves in the forward or reverse direction. When an animal having a collision course with the scraper is detected, the speed of the scraper could be selected such as to ensure that the collision is avoided, e.g. that the animal is allowed enough time (at a certain speed) to cross and leave the intended route of the scraper. If the animal deviates from the calculated path, e.g. stops or otherwise changes its speed or direction, this will also be detected based on the image processing/object recognition and the movement of the scraper could be controlled to adapt to the situation.

### Detection of broken driving mechanism

Although it is not supposed to happen, the wire/rope/chain/cable driving a scraper may break or disconnect. This could be detected by a safety mechanism sensing the force applied to move the scraper, but not necessarily. The broken wire could get caught in something and give rise to a resistance similar to the one of a propagating scraper. This insight together with use of the vision technology suggested herein enables detection of a discrepancy between an expected movement of the scraper (expected based e.g. on applied force) and an actual movement of the scraper (observed/registered/detected by means of image analysis/object recognition). Based on this difference, it may be concluded by the software and/or processing unit that the driving mechanism, e.g. the wire, or corresponding, is broken. This conclusion may lead to an alert signal in form of an indication, such as an SMS or corresponding message, to a user interface, and/or to audible and/or visual alert signal, calling for human attention.

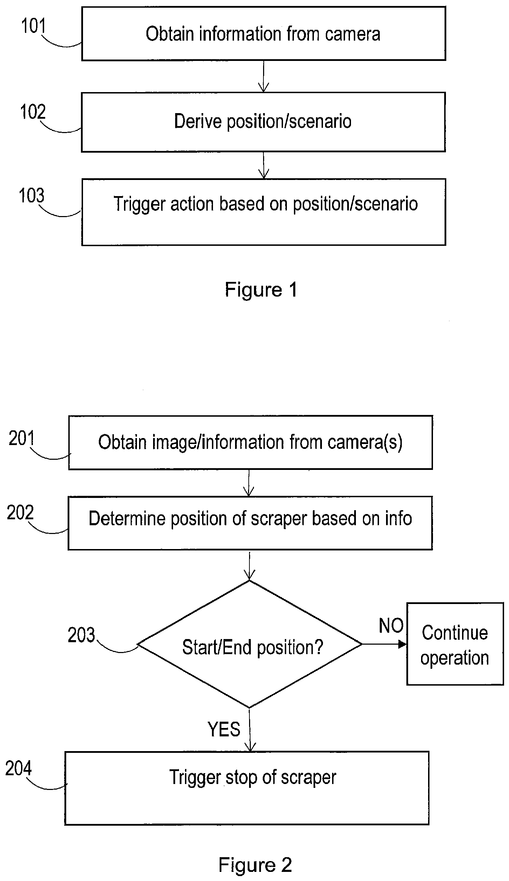

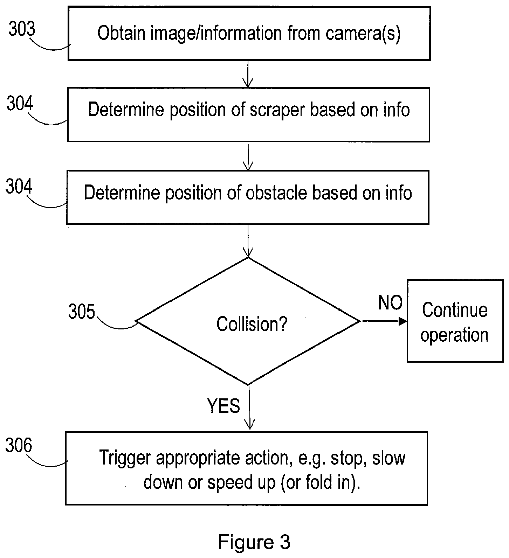

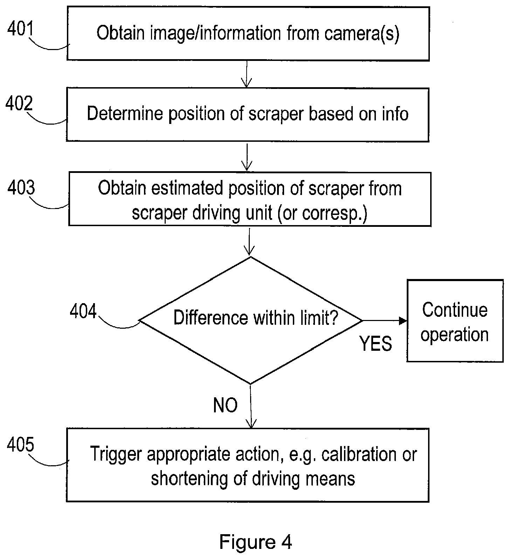

Figures 1-4 shows different exemplifying flowcharts illustrating methods associated with the embodiments described above.

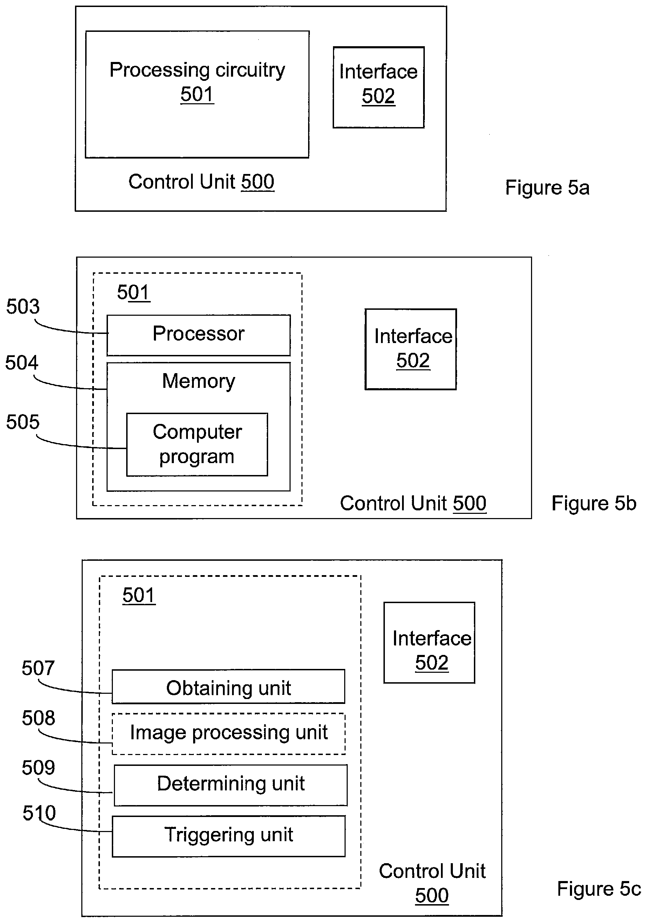

### Exemplifying embodiments of control unit (processing unit), figures 5a-5c

An exemplifying embodiment of a control unit is illustrated in a general manner in figure 5a. The control unit is operable to control, e.g. trigger, a scraper arrangement comprising e.g. a scraper driving unit and/or a scraper. The scraper arrangement is controlled to perform actions in response to information obtained from one or more cameras and possibly from a user interface. The control unit is operable to receive signals from one or more camera sensors. The signals may comprise information directly or indirectly relating to images captured by the one or more cameras. The information may be transferred via any type of wired or wireless communication, or a combination thereof, between the cameras and the control unit. The control unit is further operable to obtain signals from a scraper driving unit, such as a processing unit associated with a motor unit responsible for providing a force in order to drive the scraper.

The control unit may be comprised in a system controller in a barn or be comprised in, or as an "add on" module (additional functionality) to one of the cameras. Such a module could be a part of a camera or a system controller, or could alternatively be external to the one or more cameras and/or other central control equipment. For example, the control unit could be a part of a central system or arrangement for controlling a plurality of barn equipment. The control unit may alternatively be denoted e.g. "control device" or "processing unit". The communication between the control unit and other entities may be performed over a state of the art wireless and/or wired interface. The control unit 500 is configured to perform the actions of at least one of the method embodiments described above. The control unit 500 is associated with the same technical features, objects and advantages as the previously described method embodiments. The control unit will be described in brief in order to avoid unnecessary repetition.

The control unit may be implemented and/or described as follows:
The control unit 500 comprises processing circuitry 501 and a communication interface 502. The processing circuitry 501 is configured to cause the control unit 500 to obtain information from other entities, such as one or more cameras. The processing circuitry 501 is further configured to cause the control unit 500 to trigger an action, such as an adjustment of the speed or operation of the scraper, based on the obtained information. The communication interface 502, which may also be denoted e.g. Input/Output (I/O) interface, includes a wired and/or a wireless interface for sending data, such as commands, to other nodes or entities, and for obtaining/receiving information from other nodes or entities, such as sensors or user devices.

Figure 5b shows an embodiment of the processing circuitry 501 which comprises a processing device 503, such as a general-purpose microprocessor, e.g. a CPU, and a memory 504, in communication with the processing device, that stores or holds instruction code readable and executable by the processing device. The instruction code stored or held in the memory may be in the form of a computer program 505, which when executed by the processing device 503 causes the control unit 500 to perform the actions in the manner described above.

An alternative implementation of the processing circuitry 501 is shown in figure 5c. The processing circuitry here comprises an obtaining unit 507 for causing the control unit to obtain information. The processing circuitry further comprises a determining unit 509 for determining, based on the obtained information whether a certain criterion is fulfilled. The processing circuitry further comprises a triggering unit 510, for causing the control unit 500 to trigger an action to be performed when the criterion is determined to be fulfilled.

The processing circuitry 501 could comprise more units configured to cause the control unit to perform actions associated with one or more of the method embodiments described herein. As examples, unit 508 is provided, having dashed outline. Alternatively, any of the units 507, 509-510 could be configured to also cause the control unit to perform such other actions. The control unit 500 could, for example, comprise a determining unit for determining whether the scraper arrangement is set in a specific mode, implicating certain features. The control unit 500 could further comprise an image analysis and/or object recognition unit 508, for detecting an object and/or a position of an object and/or a predefined scenario in at least one image captured by the one or more cameras. This, and other tasks, could alternatively be performed by one of the other units.

The control unit 500 may comprise further functionality, for carrying out control unit functions not specifically mentioned herein, related e.g. to standard operation scraper arrangement.

The foregoing description of a control unit 500 is not intended to be limiting. The processing circuitry may also be implemented by other techniques known in the art, such as, e.g., hard-wired transistor logic or application-specific integrated circuits arranged in a manner sufficient to carry out the actions of the control unit 500 as described above.

Figure 6 shows an exemplifying embodiment in a schematic view of a barn alley 603. A scraper 601 is arranged to operate in the alley 603. The scraper is arranged to be pulled forward (and backwards, when appropriate) by a scraper driving arrangement 602, also comprising a motor (not shown). Two cameras, 604:1-2 are mounted on the walls at a certain distance from the floor. The cameras are mounted such as to overlook the area of operation of the scraper 601. Than is, the cameras are arranged to have at least a part of the area of operation of the scraper in their field of view. The cameras provide captured images or information derived from captured images to a processing unit (not shown). The processing unit may then determine the current position of the scraper in the alley, and trigger an appropriate action, e.g. from the scraper driving arrangement 602, when the determined position is determined to corresponds to a predefined position, such as a start position, an end position, or a specific intermediate position. Further, obstacles 605 in the alley may be detected, and the movement, e.g. speed, of the scraper 601 may be adjusted as a consequence of the detected obstacle. The obstacle 605 may be an animal or other moving object, and a movement of the obstacle 605 could be analysed in relation to a movement of the scraper 601 to determine whether a collision is impending/approaching. In that case, the processing unit may trigger an appropriate action of the scraper driving arrangement to avoid the collision, such as e.g. stopping the scraper, slowing down the speed of the scraper or even speeding up the scraper. The processing unit could further trigger the scraper 601 to fold in order to avoid the obstacle. This, however, requires that folding functionality is implemented.

Figure 7 is a schematic view of a scraper 703 and a scraper driving mechanism 704. The exemplifying distance of operation of the scraper is 70 meters, with a start position 701 at 0 meters and an end position 702 at 70 meters. The start and end positions may be calibrated using images captured when the scraper is located in these positions, or by virtual calibration, where these positions are defined e.g. in a user control interface, which preferably is graphical, where different positions of the scraper may be defined in relation to images captured by one or more cameras overlooking the area of operation, as previously described.

The features of embodiments described herein could be used separately or in combination, e.g. depending on needs or preference. To summarize some of the elements and features of the described subject matter:

Exemplifying elements and features associated with embodiments:
- One or more cameras, operable to at least one of:
   - capture two- or three dimensional images of an area;
   - provide information related to the captured images to other entities;
   - perform image processing and/or object recognition;
- One or more scrapers, operable to be pulled (or pushed) along a route of operation in order to clear e.g. manure from a floor;
- A scraper driving mechanism operable to at least one of:
   - pull (and/or push) the scraper along a route of operation;
   - reverse the scraper to its start position;
   - change the speed and/or force with which the scraper is pulled;
   - stop the scraper in response to a command, sensor input, or similar;
   - receive input from a processing unit, the info being based on information derived from images captured by one or more cameras overlooking e.g. at least part of an area of operation of the scraper.
   - provide information on characteristics of a motor, such as an applied force overtime and/or a resistance felt by the scraper, to other entities;
   - estimate a position of the scraper along its route of operation based on characteristics of the driving mechanism, such as determined/logged operation of a motor, a determined/logged cable/wire distance;
   - provide estimated information to other entities, such as e.g. a processing unit associated with the one or more cameras;
   - calibrating the position of the scraper, e.g. by correcting the estimated position based on information (based on camera input) received from a processing unit, or by shortening of a pulling wire (or similar/corresponding) or other adjustment to the pulling (or pushing) mechanism;
   The scraper driving mechanism could comprise or be connected to a control unit with processing circuitry, operable to handle e.g. wired or wireless communication with other entities; estimation and/or logging operations and control functions.
- A processing unit operable to at least one of:
   - obtain information from one or more cameras related to images captured by said one or more cameras;
   - obtain information associated with a scraper driving mechanism, related e.g. to an estimated position of a scraper;
   - perform image processing and/or object recognition;
   - trigger actions to be performed by a scraper driving mechanism;
   - provide information to a scraper driving mechanism (e.g. a therewith associated processing unit);
   - provide information or alert signals to a user interface;
   - obtain information from a user interface, e.g. for configuration/initialization of scraper positions;
   - defining or adjusting a schedule for operation of a scraper based on information obtained from one or more cameras;
   - initializing a scraper arrangement, e.g. defining start and end positions, based on information obtained from one or more cameras and/or on information obtained from a user interface.

To further summarize, the steps, functions, procedures, modules, units and/or blocks described herein may be implemented in hardware using any conventional technology, such as discrete circuit or integrated circuit technology, including both general-purpose electronic circuitry and application-specific circuitry.

Alternatively, at least some of the steps, functions, procedures, modules, units and/or blocks described above may be implemented in software such as a computer program for execution by suitable processing circuitry including one or more processing units. The software could be carried by a carrier, such as an electronic signal, an optical signal, a radio signal, or a computer readable storage medium before and/or during the use of the computer program in the nodes.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

It should also be understood that it may be possible to re-use the general processing capabilities of any conventional device or unit in which the proposed technology is implemented. It may also be possible to re-use existing software, e.g. by reprogramming of the existing software or by adding new software components.

The embodiments described above are merely given as examples, and it should be understood that the proposed technology is not limited thereto. It will be understood by those skilled in the art that various modifications, combinations and changes may be made to the embodiments without departing from the present scope. In particular, different part solutions in the different embodiments can be combined in other configurations, where technically possible.

When using the word "comprise" or "comprising" it shall be interpreted as non- limiting, i.e. meaning "consist at least of".

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

## Claims

1. Method for controlling the operation of a manure scraper, wherein the scraper is a manure scraper adapted for being pulled along an alley by a chain, rope or wire, **characterized in that** the method comprising:
- obtaining (101, 201, 303) information from one or more cameras regarding a position (102, 202, 304) of the scraper along a route of operation of the scraper, by means of image processing;
- determining (203, 305) that information derived based on said obtained information fulfills a criterion that relates to the position of the scraper along the route of operation, wherein the criterion is that the scraper has reached a predefined position and/or has entered a predefined situation e.g. in relation to an obstacle; and
- triggering (103, 204, 306) an action related to the scraper when the result of said determining fulfills the criterion, wherein the action is an adjustment of the speed or operation of the scraper,
the method being **characterised in that** the one or more cameras are mounted such as to capture images of the length of the scraper route, and the criterion is related to the position of the scraper in relation to an end position (203), and the action is to trigger (204) the motor to stop and reverse and then trigger the motor to stop reversing and start forward operation, i.e. scraping, when the scraper is determined to have reached its end position.

2. Method according to claim 1 wherein the criterion is further related to the position of the scraper in relation to an obstacle (304), such as animals or machines present in the area of operation of the scraper, or the relation between observed positions and/or movement directions and velocity of the scraper and an obstacle, and wherein the action is to controlling the scraper (306) to stop in order to avoid colliding with/hitting the obstacle, or to slow down or speed up in order to avoid a collision with the obstacle.

3. Method according to claim 2 when it is determined that the alley is clear of animals and objects, the scraper could be controlled to run at a higher speed than if there is an observed risk of an animal stepping in the way of the scraper.

4. Method according to claim 1 wherein the criterion is further related to the position of the scraper in relation to an intermediate position, such as associated with a feeding station or crossing animal pathway, and wherein the action is to adjust the speed of the scraper.

5. Method according to claim 1 wherein the scraper (703) is put in an intended or suitable starting position (701), which position is then triggered to be registered by the camera(s) as a starting position, and wherein the scraper is then moved to an intended or suitable end position (702), which position is then triggered to be registered by the camera(s) as an end position.

6. Method according to claim 1, for configuring a scraper arrangement, wherein the configuration includes selecting and/or identifying a starting position (701) and/or an end position (702) for the movement of the manure scraper, and/or determining at least one position where to adapt the speed of movement of the scraper.

7. Method according to claim 6 wherein a virtual map is created of the area in which the scraper is to be operated, based on information derived from images captured by the one or more cameras, wherein by use of a user control interface, certain positions in the virtual map/image are defined as end (702) and start (701) positions of the scraper.

8. Method according to claim 7 wherein the virtual map is presented as an image of the whole area of operation of the scraper, which is composed from information from a plurality of cameras, or only from parts of what is obtained from the one or more cameras.

9. The method according to any one of the previous claims, obtaining information from a plurality of cameras mounted such that the combined field of view of the cameras cover the length of the scraper route.

10. Scraper arrangement configured to perform a method according to any of the claims 1-9.

11. Processing unit and user interface for performing the method according to any one of claims 5-8.

## Patentansprüche

1. Verfahren zum Steuern des Betriebs eines Dungschiebers, wobei der Schieber ein Dungschieber ist, der angepasst ist, um entlang einer Gasse durch eine Kette, ein Seil oder einen Draht gezogen zu werden, **dadurch gekennzeichnet, dass** das Verfahren Folgendes umfasst:
- Erhalten (101, 201, 303) von Informationen von einer oder mehreren Kameras bezüglich einer Position (102, 202, 304) des Schiebers entlang einer Betriebsroute des Schiebers mittels Bildverarbeitung;
- Bestimmen (203, 305), dass Informationen, die basierend auf den erhaltenen Informationen abgeleitet sind, ein Kriterium erfüllen, das sich auf die Position des Schiebers entlang der Betriebsroute bezieht, wobei das Kriterium ist, dass der Schieber eine vordefinierte Position erreicht hat und/oder in eine vordefinierte Situation eingetreten ist z. B. in Bezug auf ein Hindernis; und
- Auslösen (103, 204, 306) einer Aktion, die sich auf den Schieber bezieht, wenn das Ergebnis des Bestimmens das Kriterium erfüllt, wobei die Aktion eine Anpassung der Geschwindigkeit oder des Betriebs des Schiebers ist,
wobei das Verfahren **dadurch gekennzeichnet ist, dass** die eine oder die mehreren Kameras derart montiert sind, um Bilder der Länge der Schieberroute zu erfassen, und sich das Kriterium auf die Position des Schiebers in Bezug auf eine Endposition (203) bezieht und die Aktion darin besteht, den Motor zum Anhalten und Umkehren auszulösen (204) und dann den Motor zum Anhalten des Umkehrens auszulösen und einen Vorwärtsbetrieb, d. h. das Schieben, zu starten, wenn bestimmt wird, dass der Schieber seine Endposition erreicht hat.

2. Verfahren nach Anspruch 1, wobei sich das Kriterium ferner auf die Position des Schiebers in Bezug auf ein Hindernis (304), wie etwa Tiere oder Maschinen, die in dem Betriebsbereich des Schiebers vorhanden sind, oder die Beziehung zwischen beobachteten Positionen und/oder Bewegungsrichtungen und Geschwindigkeit des Schiebers und eines Hindernisses bezieht, und wobei die Aktion darin besteht, den Schieber (306) zu steuern, um anzuhalten, um zu vermeiden, dass er mit dem Hindernis kollidiert/es trifft, oder zu verlangsamen oder zu beschleunigen, um eine Kollision mit dem Hindernis zu vermeiden.

3. Verfahren nach Anspruch 2, wobei wenn bestimmt wird, dass die Gasse frei von Tieren und Objekten ist, der Schieber gesteuert werden kann, um mit einer höheren Geschwindigkeit zu laufen, als wenn ein beobachtetes Risiko besteht, dass ein Tier dem Schieber in den Weg tritt.

4. Verfahren nach Anspruch 1, wobei das Kriterium ferner auf die Position des Schiebers in Bezug auf eine Zwischenposition bezogen ist, wie sie beispielsweise einer Fütterungsstation zugeordnet ist oder einen Tierdurchgangsweg kreuzt, und wobei die Aktion darin besteht, die Geschwindigkeit des Schiebers anzupassen.

5. Verfahren nach Anspruch 1, wobei der Schieber (703) in eine beabsichtigte oder geeignete Startposition (701) gebracht wird, wobei diese Position dann ausgelöst wird, um durch die Kamera(s) als eine Startposition registriert zu werden, und wobei der Schieber dann zu einer beabsichtigten oder geeigneten Endposition (702) bewegt wird, wobei diese Position dann ausgelöst wird, um durch die Kamera(s) als eine Endposition registriert zu werden.

6. Verfahren nach Anspruch 1 zum Konfigurieren einer Schieberanordnung, wobei die Konfiguration ein Auswählen und/oder ein Identifizieren einer Startposition (701) und/oder einer Endposition (702) für die Bewegung des Dungschiebers und/oder wenigstens das Bestimmen einer Position beinhaltet, an der die Bewegungsgeschwindigkeit des Schiebers angepasst wird.

7. Verfahren nach Anspruch 6, wobei eine virtuelle Karte des Bereichs, in dem der Schieber betrieben werden soll, basierend auf Informationen erstellt wird, die von Bildern abgeleitet sind, die durch die eine oder die mehreren Kameras aufgenommen werden, wobei durch Verwenden einer Benutzersteuerungsschnittstelle bestimmte Positionen in der/dem virtuellen Karte/Bild als End- (702) und Start(701)positionen des Schiebers definiert sind.

8. Verfahren nach Anspruch 7, wobei die virtuelle Karte als ein Bild des gesamten Betriebsbereichs des Schiebers dargestellt wird, das aus Informationen von mehreren Kameras oder nur aus Teilen dessen besteht, was von der einen oder den mehreren Kameras erhalten wird.

9. Verfahren nach einem der vorhergehenden Ansprüche, Erhalten von Informationen von mehreren Kameras, die derart montiert sind, dass das kombinierte Sichtfeld der Kameras die Länge der Schieberroute abdeckt.

10. Schieberanordnung, die konfiguriert ist, um ein Verfahren nach einem der Ansprüche 1-9 durchzuführen.

11. Verarbeitungseinheit und Benutzerschnittstelle zum Durchführen des Verfahrens nach einem der Ansprüche 5-8.

## Revendications

1. Procédé permettant de commander le fonctionnement d'un racleur de fumier, le racleur étant un racleur de fumier adapté pour être tiré le long d'une allée par une chaîne, une corde ou un fil, **caractérisé en ce que** le procédé comprend :
- l'obtention (101, 201, 303) d'informations à partir d'une ou de plusieurs caméras concernant une position (102, 202, 304) du racleur le long d'un itinéraire de fonctionnement du racleur, au moyen d'un traitement d'image ;
- la détermination (203, 305) que les informations dérivées sur la base desdites informations obtenues remplissent un critère qui concerne la position du racleur le long de l'itinéraire de fonctionnement, le critère étant que le racleur a atteint une position prédéfinie et/ou est entré dans une situation prédéfinie, par exemple par rapport à un obstacle ; et
- le déclenchement (103, 204, 306) d'une action liée au racleur lorsque le résultat de ladite détermination remplit le critère, l'action étant un réglage de la vitesse ou du fonctionnement du racleur,
le procédé étant **caractérisé en ce que** la ou les caméras sont montées de manière à capturer des images de la longueur de l'itinéraire du racleur, et le critère est lié à la position du racleur par rapport à une position finale (203), et à l'action consiste à déclencher (204) le moteur pour arrêter et reculer, puis déclencher le moteur pour arrêter la marche arrière et démarrer le fonctionnement vers l'avant, c'est-à-dire le raclage, lorsqu'il est déterminé que le racleur a atteint sa position finale.

2. Procédé selon la revendication 1, dans lequel le critère est en outre lié à la position du racleur par rapport à un obstacle (304), tel que des animaux ou des machines présents dans la zone de fonctionnement du racleur, ou à la relation entre des positions observées et/ou des directions de mouvement et la vitesse du racleur et un obstacle, et dans lequel l'action consiste à commander le racleur (306) pour qu'il s'arrête afin d'éviter d'entrer en collision avec/de heurter l'obstacle, ou pour qu'il ralentisse ou qu'il accélère afin d'éviter une collision avec l'obstacle.

3. Procédé selon la revendication 2, lorsqu'il est déterminé que l'allée est exempte d'animaux et d'objets, le racleur peut être commandé pour fonctionner à une vitesse plus élevée que lorsqu'il y a un risque observé qu'un animal marche sur le chemin du racleur.

4. Procédé selon la revendication 1, dans lequel le critère est en outre lié à la position du racleur par rapport à une position intermédiaire, telle qu'associée à une station d'alimentation ou à une voie de croisement pour animal, et dans lequel l'action consiste à régler la vitesse du racleur.

5. Procédé selon la revendication 1, dans lequel le racleur (703) est mis dans une position de départ prévue ou appropriée (701), laquelle position est ensuite déclenchée pour être enregistrée par la ou les caméras en tant que position de départ, et dans lequel le racleur est ensuite déplacé vers une position finale prévue ou appropriée (702), laquelle position est alors déclenchée pour être enregistrée par la ou les caméras en tant que position finale.

6. Procédé selon la revendication 1, pour configurer un agencement de racleur, dans lequel la configuration comporte la sélection et/ou l'identification d'une position de départ (701) et/ou d'une position finale (702) pour le mouvement du racleur de fumier, et/ou la détermination d'au moins une position où adapter la vitesse de déplacement du racleur.

7. Procédé selon la revendication 6, dans lequel une carte virtuelle est créée de la zone dans laquelle le racleur doit fonctionner, sur la base d'informations dérivées d'images capturées par la ou les caméras, dans lequel, à l'aide d'une interface de commande utilisateur, certaines positions dans le la carte/l'image virtuelle sont définies comme des positions de fin (702) et de début (701) du racleur.

8. Procédé selon la revendication 7, dans lequel la carte virtuelle est présentée comme une image de toute la zone de fonctionnement du racleur, qui est composée d'informations provenant d'une pluralité de caméras, ou uniquement de parties de ce qui est obtenu de la ou des caméras.

9. Procédé selon l'une quelconque des revendications précédentes, obtenant des informations à partir d'une pluralité de caméras montées de telle sorte que le champ de vision combiné des caméras couvre la longueur de l'itinéraire du racleur.

10. Agencement de racleur conçu pour exécuter un procédé selon l'une quelconque des revendications 1 à 9.

11. Unité de traitement et interface utilisateur pour exécuter le procédé selon l'une quelconque des revendications 5 à 8.
